# EUROPÄISCHE PATENTSCHRIFT

(11) **EP 4 034 756 B1**
(45) Veröffentlichungstag und Bekanntmachung des Hinweises auf die Patenterteilung: **24.04.2024**
(21) Anmeldenummer: 20781307.2
(22) Anmeldetag: 15.09.2020
(51) Int. Cl.: F01D 25/20, F02C 7/36, F02K 3/06, F01D 25/28

(54) **GASTURBINENTRIEBWERK EINES LUFTFAHRZEUGES MIT EINEM GETRIEBE**
GAS TURBINE ENGINE OF AN AIRCRAFT COMPRISING A TRANSMISSION
TURBINE À GAZ D'AÉRONEF COMPRENANT UNE TRANSMISSION

(30) Priorität: 27.09.2019 DE 102019126093
(43) Veröffentlichungstag der Anmeldung: 03.08.2022
(73) Patentinhaber: Rolls-Royce Deutschland Ltd & Co KG, 15827 Blankenfelde-Mahlow (DE)
(72) Erfinder: PETERSEN, Björn, 15827 Blankenfelde-Mahlow (DE)
(86) Internationale Anmeldenummer: PCT/EP2020/075738
(87) Internationale Veröffentlichungsnummer: WO 2021/058330

(56) Entgegenhaltungen:
- US-A1- 2008 093 171
- US-A1- 2014 064 930
- US-A1- 2014 090 386
- US-A1- 2017 335 774
- US-B2- 8 307 626

## Beschreibung

Die vorliegende Offenbarung betrifft ein Gasturbinentriebwerk mit einem Getriebe, das zumindest teilweise radial in einem von einer gehäusefesten Stützstruktur begrenzten und radial innerhalb eines Kernluftstromes vorgesehenen Innenraum angeordnet ist.

Aus der US 8 307 626 B2 ist ein Gasturbinentriebwerk mit einem Bläser und mit einem Kompressor bekannt, die über ein in axialer Richtung zwischen dem Bläser und dem Kompressor angeordnetes Getriebe miteinander in Verbindung stehen. Das Getriebe ist radial in einem von einer gehäusefesten Stützstruktur begrenzten Innenraum angeordnet und Wellen des Getriebes sind in der Stützstruktur drehbar gelagert. Das Gasturbinentriebwerk umfasst ein Pumpensystem mit einer Hauptpumpe und mit einer Hilfspumpe. Dabei versorgt die Hauptpumpe alle Komponenten des Gasturbinentriebwerkes mit Schmiermittel. Hierfür ist die Hauptpumpe von einer Hochdruckwelle antreibbar, mit der die Hauptpumpe über ein Getriebe in Verbindung steht.

Die Hilfspumpe wird über ein Getriebe vom Bläser angetrieben, so dass die Hilfspumpe immer Hydraulikfluid bzw. Schmiermittel fördert, sobald sich der Bläser bewegt. Die Hilfspumpe ist in der Stützstruktur drehbar gelagert und vollständig im Innenraum der Stützstruktur angeordnet.

Nachteilhafterweise ist die Hilfspumpe im Fehlerfall nur gemeinsam mit der Stützstruktur demontierbar, was jedoch einen Wartungsaufwand erheblich erhöht.

Es soll ein konstruktiv einfaches und kostengünstiges Gasturbinentriebwerk zur Verfügung gestellt werden, das zudem durch einen geringen Wartungsaufwand gekennzeichnet ist. US 2008/093171 zeigt ein Gasturbinentriebwerk gemäß dem Stand der Technik.

Diese Aufgabe wird mit einem Gasturbinentriebwerk mit den Merkmalen des Patentanspruches 1 gelöst.

Gemäß einem ersten Aspekt wird ein Gasturbinentriebwerk mit einem Getriebe zur Verfügung gestellt. Das Getriebe ist radial in einem von einer gehäusefesten Stützstruktur begrenzten und radial innerhalb eines Kernluftstromes vorgesehenen Innenraum angeordnet. Zumindest Wellen des Getriebes sind in der Stützstruktur drehbar gelagert. Der Innenraum ist gegenüber dem Kernstrom zumindest in einem radial äußeren Bereich öldicht ausgeführt.

Des Weiteren ist eine Pumpeneinheit vorgesehen, mit der das Getriebe mit Öl beaufschlagbar ist und die mit dem Getriebe antriebsmäßig verbunden ist. Die Stützstruktur ist mit einem Aufnahmebereich für die Pumpeneinheit ausgeführt.

Das Gasturbinentriebwerk gemäß der vorliegenden Offenbarung ist auf konstruktiv einfache und kostengünstige Art und Weise durch einen geringen Montageaufwand und Wartungsaufwand gekennzeichnet, da die Pumpeneinheit ausgehend von einem Bereich außerhalb des Innenraumes über eine Öffnung der Stützstruktur in den Aufnahmebereich einführbar und aus dem Aufnahmebereich über die Öffnung entnehmbar ist.

Kragt die Pumpeneinheit ausgehend vom Bereich außerhalb des Innenraumes durch die Öffnung der Stützstruktur in den Innenraum vor, ist die Wirkverbindung zwischen der Pumpeneinheit und dem Getriebe auf einfache Art und Weise herstellbar.

Zwischen einem Gehäuse der Pumpeneinheit und der Stützstruktur kann im Bereich der Öffnung eine Dichteinheit vorgesehen sein, um einen unkontrollierten Austritt von Öl aus dem Innenraum durch die Öffnung des Aufnahmebereiches auf einfache Art und Weise zu vermeiden.

Bei einer konstruktiv einfachen Ausführungsform des Gasturbinentriebwerkes gemäß der vorliegenden Offenbarung ist die Pumpeneinheit fest mit der Stützstruktur verbunden.

Ist das Getriebe in axialer Richtung des Gasturbinentriebwerkes zwischen einem Bläser und einem Kompressor des Gasturbinentriebwerkes angeordnet und stehen der Bläser und der Kompressor über das Getriebe miteinander in Verbindung, sind der Kompressor und der Bläser jeweils in einem Drehzahlbereich betreibbar, innerhalb den deren Wirkungsgrade jeweils hoch sind.

Das im Getriebe von der Pumpeneinheit zugeführte Öl wird im Betrieb des Gasturbinentriebwerkes aufgrund der am Öl angreifenden Zentrifugalkraft radial nach außen abgeschleudert. Um eine unkontrollierte Verteilung des abgeschleuderten Öles im Gasturbinentriebwerk zu vermeiden und um das Öl effizient dem Ölreservoir zuleiten zu können, kann ein radialer Abstand zwischen einem Wandungsbereich der Stützstruktur und einer Drehachse des Gasturbinentriebwerkes ausgehend von einem dem Bläser zugewandten Bereich in Richtung eines dem Kompressor zugewandten Bereichs zunächst bis zu einem Maximum ansteigend und anschließend wieder abnehmend vorgesehen sein. Dabei besteht zusätzlich die Möglichkeit, dass das Maximum wenigstens annähernd oberhalb des Bereiches zwischen dem Bläser und dem Kompressor vorgesehen ist, in dem das Getriebe angeordnet ist.

Diese Ausführung bietet den Vorteil, dass sich das vom Getriebe abgeschleuderte Öl im Bereich des Maximums des Abstandes zwischen dem Wandungsbereich der Stützstruktur und der Drehachse des Gasturbinentriebwerkes ansammelt. Das sich im Bereich des Maximums ansammelnde Öl ist anschließend auf einfache Art und Weise beispielsweise über eine im Bereich des Maximums des radialen Abstandes angeordnete Auslassöffnung aus dem Innenraum ableitbar und einem Ölkreislauf des Gasturbinentriebwerkes zuführbar, mit dem wiederum die Pumpeneinheit in Wirkverbindung steht.

Des Weiteren kann es auch vorgesehen sein, dass die Pumpeneinheit über eine Ölleitung, die durch den Innenraum verläuft, im Bereich des Maximums des radialen Abstandes im Innenraum gesammeltes Öl ansaugt und in Richtung des Getriebes fördert.

Dabei kann der Ölkreislauf einem ersten Ölkreislauf des Gasturbinentriebwerkes entsprechen, über den verschiedene Bereiche des Gasturbinentriebwerkes, wie Lager, Wärmetauscher und dergleichen, mit Öl beaufschlagt werden. Des Weiteren besteht auch die Möglichkeit, dass der Ölkreislauf einen zweiten Ölkreislauf des Gasturbinentriebwerkes darstellt, über den nur das Getriebe von der Pumpeneinheit mit Öl versorgbar ist. Dabei können der erste Ölkreislauf, der dann eine separate Pumpeneinheit aufweisen kann, und der zweite Ölkreislauf bedarfsweise auch miteinander in Verbindung stehen oder miteinander in Wirkverbindung bringbar sein.

Bei weiteren konstruktiven Ausführungsformen des Gasturbinentriebwerkes gemäß der vorliegenden Offenbarung ist es vorgesehen, dass der Aufnahmebereich und die Öffnung der Stützstruktur in dem dem Bläser oder in dem dem Kompressor zugewandten Bereich der Stützstruktur vorgesehen sind. Damit ist die Pumpeneinheit entweder bei demontiertem Bläser oder bei demontiertem Kompressor auf einfache Art und Weise montierbar oder demontierbar und im Fehlerfall mit geringem Montageaufwand austauschbar.

Der Aufnahmebereich kann vollständig außerhalb des Innenraumes, außerhalb und innerhalb des Innenraumes oder vollständig innerhalb des Innenraumes vorgesehen sein. Damit sind bereits bestehende Gasturbinentriebwerkssysteme ohne aufwändige konstruktive Maßnahmen gemäß der vorliegenden Offenbarung ausführbar.

Steht eine Antriebswelle der Pumpeneinheit mit einer Welle des Getriebes in Wirkverbindung, wird die Pumpeneinheit in gewünschtem Umfang vom Getriebe angetrieben und versorgt das Getriebe mit Öl.

Ist zwischen der Antriebswelle der Pumpeneinheit und der Welle des Getriebes eine Getriebeeinheit vorgesehen, ist die Drehzahl der Antriebswelle gegenüber der Drehzahl der Welle des Getriebes anhebbar und die Pumpeneinheit kleiner dimensionierbar und somit bauraumgünstig ausführbar.

Eine erste Welle des Getriebes kann über eine Bläserwelle mit dem Bläser verbunden sein und eine zweite Welle des Getriebes kann über eine Kompressorwelle mit dem Kompressor in Wirkverbindung stehen. Damit besteht wiederum auf einfache Art und Weise die Möglichkeit, den Bläser mit einer von der Drehzahl des Kompressors abweichenden Drehzahl zu betreiben, wenn die Wellen des Getriebes miteinander über Zahnräder und eine entsprechende Übersetzung in Verbindung stehen.

Des Weiteren ist die Pumpeneinheit dann auf konstruktiv einfache Art und Weise vom Bläser oder ausgehend vom Kompressor antreibbar und eine Ölversorgung des Getriebes über einen großen Betriebsbereich des Gasturbinentriebwerkes gewährleistet.

Bei weiteren mit geringem Aufwand montierbaren und wartbaren Ausführungsformen des Gasturbinentriebwerkes gemäß der vorliegenden Offenbarung ist zumindest die erste Welle des Getriebes in einem dem Bläser zugewandten Bereich der Stützstruktur und/oder ist zumindest die zweite Welle des Getriebes in einem dem Kompressor zugewandten Bereich der Stützstruktur drehbar gelagert.

Die Bläserwelle und/oder die Kompressorwelle ist bzw. sind bei weiteren konstruktiv einfachen Ausführungsformen des Gasturbinentriebwerkes gemäß der vorliegenden Offenbarung in der Stützstruktur drehbar gelagert.

Steht eine Saugseite der Pumpeneinheit beispielsweise über eine Ölleitung, die im Innenraum der Stützstruktur verlaufend vorgesehen ist, mit einem Ölreservoir in Verbindung, ist das Getriebe über einen separaten Ölkreislauf, der die Pumpeneinheit und das Ölreservoir im Innenraum der Stützstruktur umfasst, mit Öl versorgbar. Dabei ist die Ölversorgung bei abgeschaltetem Gasturbinentriebwerk gewährleistet, wenn die Pumpeneinheit vom Bläser oder vom Kompressor angetrieben wird.

Umfasst die Pumpeneinheit zumindest zwei Pumpen, ist die Ölversorgung des Getriebes in vorteilhafter Weise an bestehende Bauraumgegebenheiten angepasst realisierbar.

Dabei kann es vorgesehen sein, dass die wenigstens zwei Pumpen auf derselben Seite des Getriebes, d. h. auf der dem Bläser zugewandten Seite der Stützstruktur oder auf der dem Kompressor zugewandten Seite der Stützstruktur, in Aufnahmebereichen der Stützstruktur und über den Umfang der Stützstruktur verteilt angeordnet sind.

Des Weiteren besteht auch die Möglichkeit, dass wenigstens eine der Pumpen auf der einen Seite des Getriebes, z. B. auf der dem Bläser zugewandten Seite, und wenigstens eine weitere Pumpe auf der anderen Seite des Getriebes, die dann dem Kompressor zugewandt ist, angeordnet ist.

Das Getriebe kann als ein bauraumgünstiges und durch ein geringes Bauteilgewicht gekennzeichnetes Planetengetriebe mit wenigstens einem Sonnenrad und/oder mit wenigstens einem Hohlrad sowie mit wenigstens einem Planetenträger ausgeführt sein. Auf dem Planetenträger ist wenigstens ein Planetenrad drehbar angeordnet.

Wie hier an anderer Stelle angeführt wird, kann sich die vorliegende Offenbarung auf ein Gasturbinentriebwerk beziehen. Solch ein Gasturbinentriebwerk kann einen Triebwerkskern umfassen, der eine Turbine, einen Brennraum, einen Verdichter und eine die Turbine mit dem Verdichter verbindende Kernwelle umfasst. Solch ein Gasturbinentriebwerk kann ein Gebläse (mit Gebläseschaufeln) umfassen, das stromaufwärts des Triebwerkskerns positioniert ist.

Anordnungen der vorliegenden Offenbarung können insbesondere, jedoch nicht ausschließlich, für Gebläse, die über ein Getriebe angetrieben werden, von Vorteil sein. Entsprechend kann das Gasturbinentriebwerk ein Getriebe umfassen, das einen Eingang von der Kernwelle empfängt und Antrieb für das Gebläse zum Antreiben des Gebläses mit einer niedrigeren Drehzahl als die Kernwelle abgibt. Der Eingang für das Getriebe kann direkt von der Kernwelle oder indirekt von der Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich das Gebläse mit einer niedrigeren Drehzahl dreht). Dabei kann das Getriebe als ein vorstehend näher beschriebenes Getriebe ausgeführt sein.

Das Gasturbinentriebwerk, das hier beschrieben und beansprucht wird, kann eine beliebige geeignete allgemeine Architektur aufweisen. Beispielsweise kann das Gasturbinentriebwerk eine beliebige gewünschte Anzahl an Wellen, die Turbinen und Verdichter verbinden, beispielsweise eine, zwei oder drei Wellen, aufweisen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Der Triebwerkskern kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei solch einer Anordnung kann der zweite Verdichter axial stromabwärts des ersten Verdichters positioniert sein. Der zweite Verdichter kann dahingehend angeordnet sein, Strömung von dem ersten Verdichter aufzunehmen (beispielsweise direkt aufzunehmen, beispielsweise über einen allgemein ringförmigen Kanal).

Das Getriebe kann dahingehend angeordnet sein, von der Kernwelle, die dazu konfiguriert ist, sich (beispielsweise im Gebrauch) mit der niedrigsten Drehzahl zu drehen, (beispielsweise die erste Kernwelle in dem obigen Beispiel) angetrieben zu werden. Beispielsweise kann das Getriebe dahingehend angeordnet sein, lediglich von der Kernwelle, die dazu konfiguriert ist, sich (beispielsweise im Gebrauch) mit der niedrigsten Drehzahl zu drehen, (beispielsweise nur von der ersten Kernwelle und nicht der zweiten Kernwelle bei dem obigen Beispiel) angetrieben zu werden. Alternativ dazu kann das Getriebe dahingehend angeordnet sein, von einer oder mehreren Wellen, beispielsweise der ersten und/oder der zweiten Welle in dem obigen Beispiel, angetrieben zu werden.

Bei einem Gasturbinentriebwerk, das hier beschrieben und beansprucht wird, kann ein Brennraum axial stromabwärts des Gebläses und des Verdichters (der Verdichter) vorgesehen sein. Beispielsweise kann der Brennraum direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Der Brennraum kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen, bei denen es sich um variable Statorschaufeln (dahingehend, dass ihr Anstellwinkel variabel sein kann) handeln kann. Die Reihe von Rotorschaufeln und die Reihe von Statorschaufeln können axial voneinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial voneinander versetzt sein.

Jede Gebläseschaufel kann mit einer radialen Spannweite definiert sein, die sich von einem Fuß (oder einer Nabe) an einer radial innenliegenden von Gas überströmten Stelle oder an einer Position einer Spannbreite von 0 % zu einer Spitze an einer Position einer Spannbreite von 100 % erstreckt. Das Verhältnis des Radius der Gebläseschaufel an der Nabe zu dem Radius der Gebläseschaufel an der Spitze kann weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Gebläseschaufel an der Nabe zu dem Radius der Gebläseschaufel an der Spitze kann in einem einschließenden Bereich liegen, der von zwei der Werte im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an dem vorderen Randteil (oder dem axial am weitesten vorne liegenden Rand) der Schaufel gemessen werden. Das Nabe-Spitze-Verhältnis bezieht sich natürlich auf den von Gas überströmten Abschnitt der Gebläseschaufel, d. h. den Abschnitt, der sich radial außerhalb jeglicher Plattform befindet.

Der Radius des Gebläses kann zwischen der Mittellinie des Triebwerks und der Spitze der Gebläseschaufel an ihrem vorderen Rand gemessen werden. Der Durchmesser des Gebläses (der einfach das Doppelte des Radius des Gebläses sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Gebläsedurchmesser kann in einem einschließenden Bereich liegen, der von zwei der Werte im vorhergehenden Satz begrenzt wird (d. h. die Werte können obere oder untere Grenzen bilden).

Die Drehzahl des Gebläses kann im Gebrauch variieren. Allgemein ist die Drehzahl geringer für Gebläse mit einem größeren Durchmesser. Lediglich als ein nicht einschränkendes Beispiel kann die Drehzahl des Gebläses bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Gebläses bei Konstantgeschwindigkeitsbedingungen für ein Triebwerk mit einem Gebläsedurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Gebläses bei Konstantgeschwindigkeitsbedingungen für ein Triebwerk mit einem Gebläsedurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich das Gebläse (mit zugehörigen Gebläseschaufeln) um eine Drehachse. Diese Drehung führt dazu, dass sich die Spitze der Gebläseschaufel mit einer Geschwindigkeit U_{Spitze} bewegt. Die von den Gebläseschaufeln an der Strömung verrichtete Arbeit resultiert in einem Anstieg der Enthalpie dH der Strömung. Eine Gebläsespitzenbelastung kann als dH/U_{Spitze}² definiert werden, wobei dH der Enthalpieanstieg (beispielsweise der durchschnittliche 1-D-Enthalpieanstieg) über das Gebläse hinweg ist und U_{Spitze} die (Translations-) Geschwindigkeit der Gebläsespitze, beispielsweise an dem vorderen Rand der Spitze, ist (die als Gebläsespitzenradius am vorderen Rand multipliziert mit der Winkelgeschwindigkeit definiert werden kann). Die Gebläsespitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Gebläsespitzenbelastung kann in einem einschließenden Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem einschließenden Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Triebwerkskerns befinden. Die radial äußere Fläche des Bypasskanals kann durch eine Triebwerksgondel und/oder ein Gebläsegehäuse definiert werden.

Das Gesamtdruckverhältnis eines Gasturbinentriebwerks, das hier beschrieben und beansprucht wird, kann als das Verhältnis des Staudrucks stromaufwärts des Gebläses zu dem Staudruck am Ausgang des Höchstdruckverdichters (vor dem Eingang in den Brennraum) definiert werden. Als ein nicht einschränkendes Beispiel kann das Gesamtdruckverhältnis eines Gasturbinentriebwerks, das hier beschrieben und beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem einschließenden Bereich liegen, der von zwei der Werte im vorhergehenden Satz begrenzt wird (d. h. die Werte können obere oder untere Grenzen bilden).

Der spezifische Schub eines Gasturbinentriebwerks kann als der Nettoschub des Gasturbinentriebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 Nkg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem einschließenden Bereich liegen, der von zwei der Werte im vorhergehenden Satz begrenzt wird (d. h. die Werte können obere oder untere Grenzen bilden). Solche Gasturbinentriebwerke können im Vergleich zu herkömmlichen Gasturbinentriebwerken besonders effizient sein.

Ein Gasturbinentriebwerk, das hier beschrieben und beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160kN, 170kN, 180kN, 190kN, 200kN, 250kN, 300kN, 350kN, 400kN, 450kN, 500kN oder 550kN in der Lage sein. Der Höchstschub kann in einem einschließenden Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 Grad C (Umgebungsdruck 101,3 kPa, Temperatur 30 Grad C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zum Brennraum, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400K, 1450K, 1500K, 1550K, 1600K oder 1650K betragen (liegen). Die TET bei Konstantgeschwindigkeit kann in einem einschließenden Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700K, 1750K, 1800K, 1850K, 1900K, 1950K oder 2000K betragen (liegen). Die maximale TET kann in einem einschließenden Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Gebläseschaufel und/oder ein Blattabschnitt einer Gebläseschaufel, die hier beschrieben wird, kann aus einem beliebigen geeigneten Material oder einer Kombination aus Materialien hergestellt werden. Beispielsweise kann zumindest ein Teil der Gebläseschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Gebläseschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Gebläseschaufel kann mindestens zwei Bereiche umfassen, die unter Verwendung verschiedener Materialien hergestellt werden. Beispielsweise kann die Gebläseschaufel einen vorderen Schutzrand aufweisen, der unter Verwendung eines Materials hergestellt wird, das dem Aufschlagen (beispielsweise von Vögeln, Eis oder anderem Material) besser widerstehen kann als der Rest der Schaufel. Solch ein vorderer Rand kann beispielsweise unter Verwendung von Titan oder einer auf Titan basierenden Legierung hergestellt werden. Somit kann die Gebläseschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Gebläse, das hier beschrieben wird, kann einen mittleren Abschnitt umfassen, von dem sich die Gebläseschaufeln, beispielsweise in einer radialen Richtung, erstrecken können. Die Gebläseschaufeln können auf beliebige gewünschte Art und Weise an dem mittleren Abschnitt angebracht sein. Beispielsweise kann jede Gebläseschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Gebläseschaufel an der Nabe/Scheibe in einen entsprechenden Schlitz in der Nabe/Scheibe eingesteckt und/oder damit in Eingriff gebracht werden kann. Als ein weiteres Beispiel können die Gebläseschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Gebläseschaufeln aus einem Block maschinell herausgearbeitet werden und/oder mindestens ein Teil der Gebläseschaufeln kann durch Schweißen, wie z. B. lineares Reibschweißen, an der Nabe/Scheibe angebracht werden.

Die Gasturbinentriebwerke, die hier beschrieben und beansprucht werden, können oder können nicht mit einer VAN (Variable Area Nozzle - Düse mit variablem Querschnitt) versehen sein. Solch eine Düse mit variablem Querschnitt kann eine Variation des Ausgangsquerschnitts des Bypasskanals im Gebrauch gestatten. Die allgemeinen Prinzipien der vorliegenden Offenbarung können auf Triebwerke mit oder ohne einer VAN zutreffen.

Das Gebläse eines Gasturbinentriebwerkes, das hier beschrieben und beansprucht wird, kann eine beliebige gewünschte Anzahl an Gebläseschaufeln, beispielsweise 16, 18, 20 oder 22 Gebläseschaufeln, aufweisen.

Gemäß der hier erfolgenden Verwendung können Konstantgeschwindigkeitsbedingungen Konstantgeschwindigkeitsbedingungen eines Luftfahrzeugs bedeuten, an dem das Gasturbinentriebwerk angebracht ist. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Gasturbinentriebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantfahrtbedingung sein. Bei einigen Luftfahrzeugen können die Konstantfahrtbedingungen außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt, entsprechen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 Grad C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Gebläsebetrieb ausgelegt ist, entsprechen. Dies kann beispielsweise die Bedingungen, bei denen das Gebläse (oder das Gasturbinentriebwerk) konstruktionsgemäß den optimalen Wirkungsgrad aufweist, bedeuten.

Im Gebrauch kann ein Gasturbinentriebwerk, das hier beschrieben und beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise 2 oder 4) Gasturbinentriebwerk zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Es werden nun beispielhaft Ausführungsformen mit Bezug auf die Figuren beschrieben.

Es zeigt:
Fig. 1 eine Längsschnittansicht eines Gasturbinentriebwerks;
Fig. 2 eine vergrößerte Teillängsschnittansicht eines stromaufwärtigen Abschnitts eines Gasturbinentriebwerks;
Fig. 3 eine Alleindarstellung eines Getriebes für ein Gasturbinentriebwerk;
Fig. 4 eine stark schematisierte Darstellung des in Fig. 2 gezeigten Bereiches eines weiteren Ausführungsbeispiels des Gasturbinentriebwerkes, bei dem eine Pumpe in den dem Bläser zugewandten Bereich der Stützstruktur integriert ist;
Fig. 5 eine Fig. 4 entsprechende Darstellung eines weiteren Ausführungsbeispiels des Gasturbinentriebwerkes, bei der die Pumpe in einem dem Kompressor zugewandten Bereich der Stützstruktur integriert ist und mit einem Planetenträger des Getriebes antriebsmäßig in Verbindung steht;
Fig. 6 eine Fig. 5 entsprechende Darstellung einer weiteren Ausführungsform des Gasturbinentriebwerkes, bei dem die Pumpe mit einer Kompressorwelle antriebsmäßig in Verbindung steht;
Fig. 7 eine schematisierte dreidimensionale Teilansicht der Stützstruktur und der Pumpeneinheit in demontiertem Zustand der Pumpeneinheit;
Fig. 8 eine Fig. 7 entsprechende Darstellung der Stützstruktur und der Pumpeneinheit in montiertem Zustand der Pumpeneinheit; und
Fig. 9 eine erste Ausführungsform eines Ölkreislaufes des Gasturbinentriebwerkes gemäß Fig. 1.

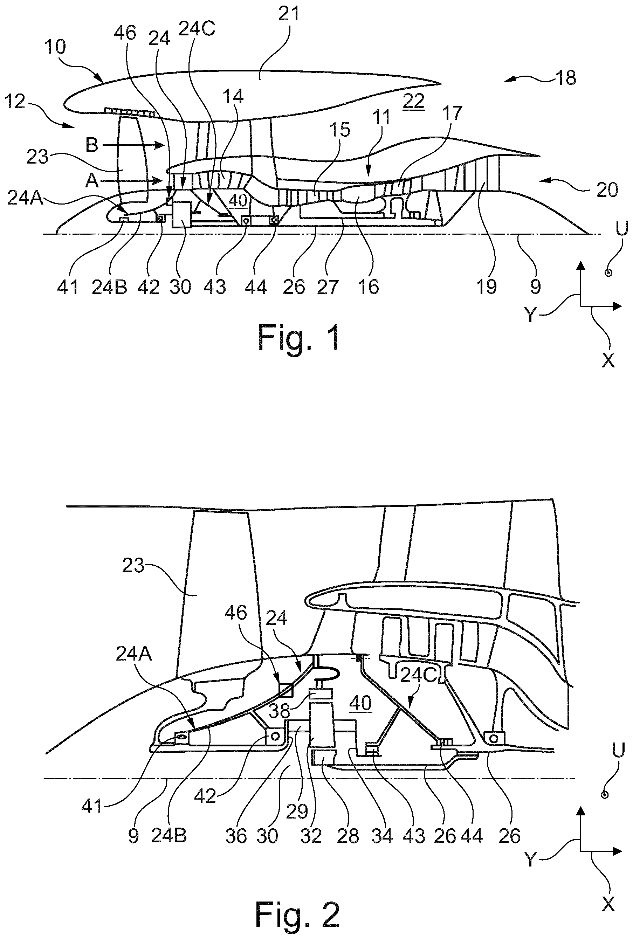

Fig. 1 stellt ein Gasturbinentriebwerk 10 mit einer Hauptdrehachse 9 dar. Das Triebwerk 10 umfasst einen Lufteinlass 12 und einen Bläser bzw. ein Schubgebläse 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Kompressor bzw. einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Kompressorwelle bzw. eine Welle 26 und ein Getriebe bzw. Umlaufrädergetriebe 30 an der Niederdruckturbine 19 angebracht und wird durch diese angetrieben. Dabei wird die Welle 26 auch als Kernwelle bezeichnet.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an, die auch als Kernwelle bezeichnet wird. Das Gebläse 23 stellt allgemein den Hauptteil der Schubkraft bereit. Das Umlaufrädergetriebe 30 ist ein Untersetzungsgetriebe.

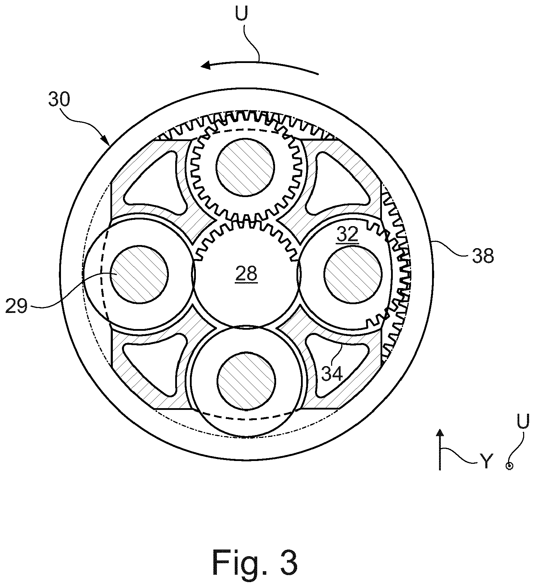

Eine beispielhafte Anordnung für ein Getriebegebläse-Gasturbinentriebwerk 10 wird in Fig. 2 gezeigt. Die Niederdruckturbine 19 (siehe Fig. 1) treibt die Welle 26 an, die mit einem Sonnenrad 28 der Umlaufrädergetriebe-Anordnung 30 gekoppelt ist. Mehrere Planetenräder 32, die durch einen Planetenträger 34 miteinander gekoppelt sind, befinden sich von dem Sonnenrad 28 radial außen und kämmen damit und sind jeweils drehbar auf drehfest mit dem Planetenträger 34 verbundenen und in Fig. 3 näher gezeigten Trägerelementen 29 angeordnet. Der Planetenträger 34 beschränkt die Planetenräder 32 darauf, synchron um das Sonnenrad 28 zu kreisen, während er ermöglicht, dass sich jedes Planetenrad 32 auf den Trägerelementen 29 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

Das Umlaufrädergetriebe 30 wird in Fig. 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Fig. 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Umlaufrädergetriebes 30 umfassen allgemein mindestens drei Planetenräder 32.

Das in Fig. 2 und 3 beispielhaft dargestellte Umlaufrädergetriebe 30 ist ein Planetengetriebe, bei dem der Planetenträger 34 mit einem Gestänge 36 bzw. mit einer Bläserwelle gekoppelt ist, wobei das Hohlrad 38 festgelegt ist. Jedoch kann eine beliebige andere geeignete Art von Umlaufrädergetriebe 30 verwendet werden. Als ein weiteres Beispiel kann das Umlaufrädergetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Fig. 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Fig. 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Fig. 2 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Fig. 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Fig. 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann oder können einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden.

Die Geometrie des Gasturbinentriebwerks 10 und Komponenten davon wird bzw. werden durch ein herkömmliches Achsensystem definiert, das eine axiale Richtung X (die auf die Drehachse 9 ausgerichtet ist), eine radiale Richtung Y (in der Richtung von unten nach oben in Fig. 1) und eine Umfangsrichtung U (senkrecht zu der Ansicht in Fig. 1) umfasst. Die axiale, die radiale und die Umfangsrichtung X, Y und U verlaufen senkrecht zueinander.

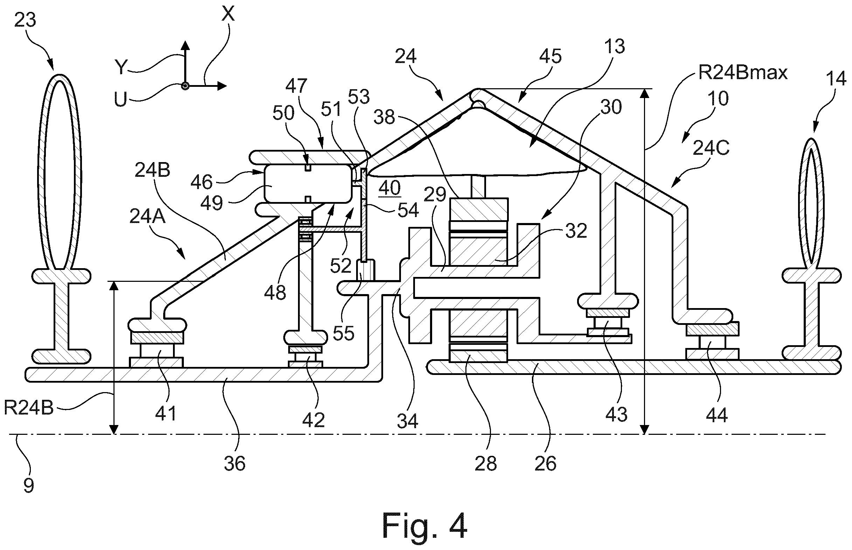

Das Getriebe 30 ist in der in Fig. 4 bis Fig. 6 jeweils näher gezeigten Art und Weise radial in einem von der gehäusefesten Stützstruktur 24 begrenzten und radial innerhalb des Kernluftstromes A vorgesehenen Innenraum 40 angeordnet. Des Weiteren sind der Planetenträger 34 und das Sonnenrad 28, das mit der Kompressorwelle 26 drehfest verbunden ist, über Lager 41 bis 44 in der Stützstruktur 24 drehbar gelagert. Dabei ist auch die Bläserwelle 36 über das Lager 41 in der Stützstruktur 24 drehbar gelagert. Zusätzlich stützt sich die Kompressorwelle 26 über das Lager 44 an der Stützstruktur 24 ab.

Der Innenraum 40 ist gegenüber der Umgebung der Stützstruktur 24 und gegenüber dem Kernluftstrom A in einem radial äußeren Bereich 45 öldicht ausgeführt. Im Betrieb vom Getriebe 30 abgespritztes Öl wird im radial äußeren Bereich 45 aufgefangen und gesammelt. Dadurch wird eine unkontrollierte Verteilung des Öls im Gasturbinentriebwerk 10 vermieden. Das im radial äußeren Bereich gesammlete Ölvolumen ist in der Zeichnung unter dem Bezugszeichen 13 näher dargestellt.

Darüber hinaus ist eine Pumpeneinheit 46 vorgesehen, mit der das Getriebe 30 mit Öl beaufschlagbar ist und die mit dem Getriebe 30 antriebsmäßig verbunden ist. Dabei ist die Stützstruktur 24 mit einem Aufnahmebereich 47 für die Pumpeneinheit 46 ausgeführt, in den die Pumpeneinheit 46 ausgehend von einem Bereich außerhalb des Innenraumes 40 über eine Öffnung 48 der Stützstruktur 24 einführbar und aus dem die Pumpeneinheit 46 über die Öffnung 48 entnehmbar ist. Die Pumpeneinheit 46 ist beispielsweise über Verschraubungen oder der gleichen fest mit der Stützstruktur 24 verbunden.

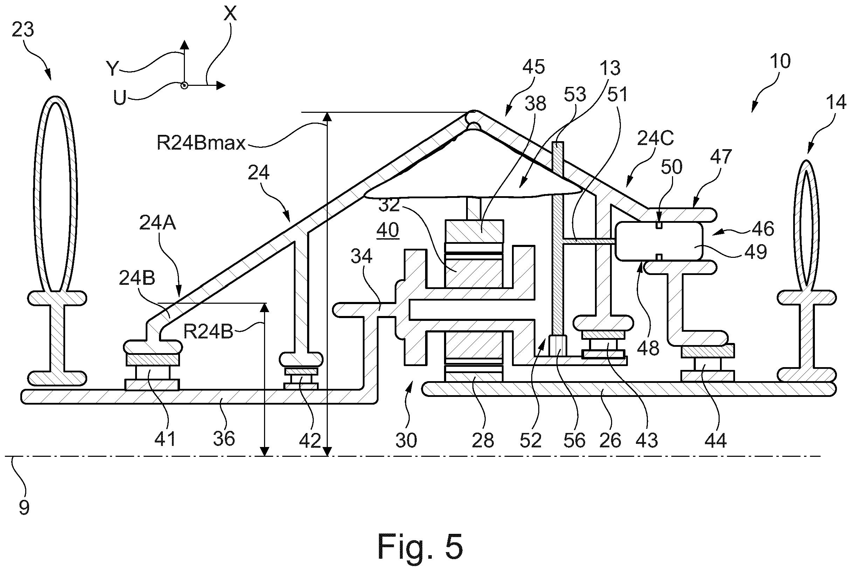

Bei den in Fig. 4 und Fig. 5 dargestellten Ausführungsbeispielen des Gasturbinentriebwerkes 10 kragt die Pumpeneinheit 46 ausgehend vom Bereich außerhalb des Innenraumes 40 durch die Öffnung 48 der Stützstruktur 24 jeweils in den Innenraum 40 vor. Der Aufnahmebereich 47 ist bei diesen beiden Ausführungsbeispielen des Gasturbinentriebwerkes 10 jeweils vollständig außerhalb des Innenraumes 40 angeordnet. Zusätzlich sind die Pumpeneinheit 46, der Aufnahmebereich 47 sowie die Öffnung 48 bei dem Gasturbinentriebwerk 10 gemäß Fig. 4 in einem dem Bläser 23 zugewandten Bereich 24A der Stützstruktur 24 vorgesehen.

Ein radialer Abstand R24B zwischen einem Wandungsbereich 24B der Stützstruktur 24 und der Hauptdrehachse 9 des Gasturbinentriebwerkes 10 steigt ausgehend von dem dem Bläser 23 zugewandten Bereich 24A der Stützstruktur 24 in Richtung eines dem Kompressor 14 zugewandten Bereiches 24C der Stützstruktur 24 zunächst bis zu einem Maximum R24Bmax an. Anschließend nimmt der radiale Abstand R24B wieder ab. Das Maximum R24Bmax des radialen Abstandes R24B ist wenigstens annähernd oberhalb des Bereiches des Gasturbinentriebwerkes 10 zwischen dem Bläser 24 und dem Niederdruckkompressor bzw. Niederdruckverdichter 14 vorgesehen, in dem das Getriebe 30 angeordnet ist. Damit wird auf einfache Art und Weise erreicht, dass während der Rotation der Bauteile des Getriebes 30 von diesem abgespritztes Öl mit geringem Aufwand im radial äußeren Bereich 45 der Stützstruktur 24 aufgefangen und gesammelt wird.

Zwischen einem Gehäuse 49 der Pumpeneinheit 46 und der Stützstruktur 24 ist im Bereich der Öffnung 48 jeweils eine Dichteinheit 50 vorgesehen, um über die Öffnung 48 einen unerwünschten Ölaustritt zu vermeiden.

Eine Antriebswelle 51 der Pumpeneinheit 46 gemäß Fig. 4 und gemäß Fig. 5 ist über eine Getriebeeinheit 52 antriebsmäßig mit dem Planetenträger 34 verbunden. Die Getriebeeinheit 52 gemäß Fig. 4 umfasst ein erstes Stirnrad 53, welches mit der Antriebswelle 51 der Pumpeneinheit 46 verbunden ist. Das Stirnrad 53 kämmt mit einem in der Stützstruktur 24A drehbar gelagerten weiteren Stirnrad 54, das mit einem Stirnradbereich 55 des Planetenträgers 34 in Eingriff steht.

Generell fördert die Pumpeneinheit 46 bei allen in der Zeichnung dargestellten Ausführungsformen des Gasturbinentriebwerkes 10 unabhängig von der Drehrichtung der Antriebswelle 51 der Pumpeneinheit 46 Öl zu nicht näher dargestellten Bereichen des Getriebes 30, die Wälzlager oder Gleitlager der Planetenräder 32 sowie weitere Bereiche des Getriebes 30 sein können.

Die in Fig. 4 gezeigte Anordnung der Pumpeneinheit 46 bietet die Möglichkeit, dass die Pumpeneinheit 46 durch eine Rotation des Bläsers 23 angetrieben wird und das Getriebe 30 mit Öl versorgt, selbst wenn das Gasturbinentriebwerk 10 abgeschaltet ist und seitens des Niederdruckverdichters 14 kein Antriebsmoment am Getriebe 30 anliegt. Des Weiteren ist die Pumpeneinheit 46 auch vom Bläser 23 antreibbar, wenn im Schadensfall über die Kompressorwelle 26 oder das Sonnenrad 28 kein Drehmoment in das Getriebe 30 einleitbar ist. Damit ist das Getriebe 30 über die Pumpeneinheit 46 über einen großen Betriebsbereich des Gasturbinentriebwerkes 10 mit Öl versorgbar. Zusätzlich bietet die in Fig. 4 gezeigte Anordnung der Pumpeneinheit 46 die Möglichkeit, die Pumpeneinheit 46 bei demontiertem Bläser 23 mit geringem Aufwand während einer Wartung auszutauschen bzw. zu ersetzen.

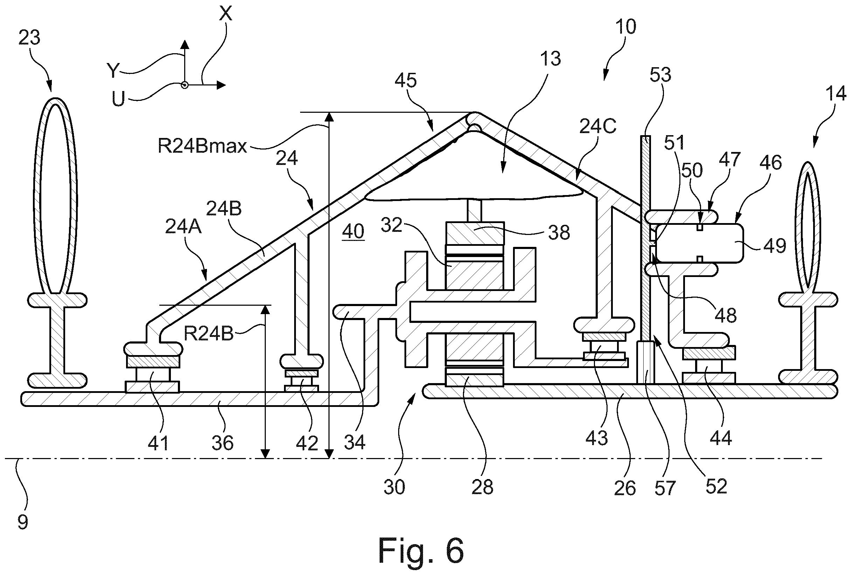

Im Unterschied dazu ist die Pumpeneinheit 46 bei den in Fig. 5 und Fig. 6 gezeigten Ausführungsbeispielen des Gasturbinentriebwerkes 10 in einem dem Niederdruckverdichter 14 zugewandten Bereich 24C der Stützstruktur 24 vorgesehen. Bei dem in Fig. 5 gezeigten Ausführungsbeispiel des Gasturbinentriebwerkes 10 kragt die Pumpeneinheit 46 in den Innenraum 40 der Stützstruktur 24 vor, während die Pumpeneinheit 46 gemäß Fig. 6 nahezu vollständig außerhalb des Innenraumes 40 im Aufnahmebereich 47 angeordnet ist.

Die Antriebswelle 51 der Pumpeneinheit 46 gemäß Fig. 5 ist wiederum drehfest mit dem vollständig im Innenraum 40 angeordneten und gemeinsam mit der Pumpeneinheit 46 in die Zeichenebene geklappt dargestellten Stirnrad 53 verbunden, das direkt mit einem Stirnradbereich 56 des Planetenträgers 34 kämmt und in nicht näher dargestellter Art und Weise in der Stützstruktur 24 gelagert ist.

Im Unterschied dazu kämmt das ebenfalls in der Stützstruktur 24 drehbar gelagerte, vollständig im Innenraum angeordnete und gemeinsam mit der Pumpeneinheit in die Zeichenebene geklappt dargestellte Stirnrad 53 der Getriebeeinheit 52 bei dem Ausführungsbeispiel des Gasturbinentriebwerkes 10 gemäß Fig. 6 mit einem Stirnradbereich 57 der Kompressorwelle 26.

Die Anordnung der Pumpeneinheit 46 gemäß Fig. 5 und Fig. 6 bietet die Möglichkeit, die Pumpeneinheit 46 bei zuvor demontiertem Niederdruckverdichter 14 zu warten und gegebenenfalls ohne das Stirnrad 53 zu demontieren. Zusätzlich ist die Wahrscheinlichkeit, dass die Pumpeneinheit 46 des Gasturbinentriebwerkes 10 gemäß Fig. 5 bzw. gemäß Fig. 6 durch einen Schaufelbruch im Bereich des Bläsers 23 beschädigt wird, im Vergleich zu der Ausführung des Gasturbinentriebwerkes 10 gemäß Fig. 4 geringer.

Die antriebsmäßige Anbindung der Pumpeneinheit 46 an die Kompressorwelle 26 bietet wiederum die Möglichkeit, die Pumpeneinheit 46 mit höheren Antriebsdrehzahlen zu betreiben und die Pumpeneinheit 46 im Vergleich zur Anbindung an den Planetenträger 34 bzw. an die Bläserwelle 36 kleiner zu dimensionieren.

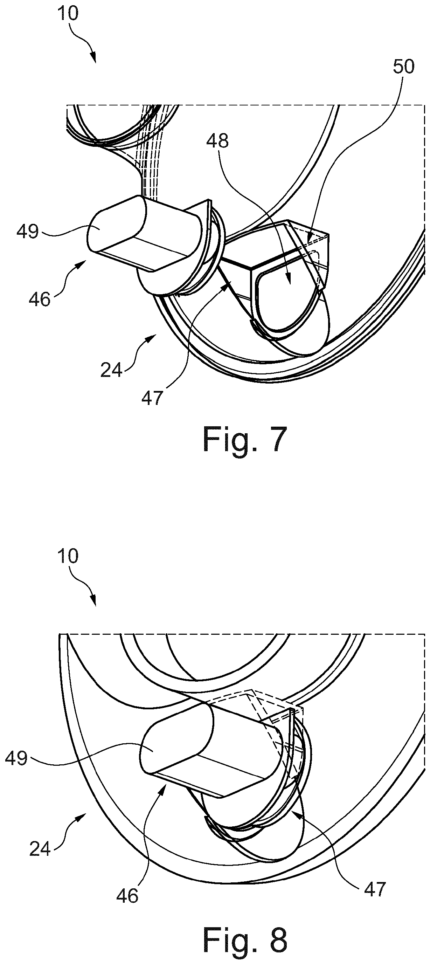

Fig. 7 und Fig. 8 zeigen jeweils eine dreidimensionale Teilansicht der Stützstruktur 24 und der Pumpeneinheit 46. Dabei ist die Pumpeneinheit 46 in Fig. 7 in demontiertem und in Fig. 8 in montiertem Betriebszustand dargestellt.

Generell kann es vorgesehen sein, dass eine Saugseite der Pumpeneinheit 46 direkt mit dem radial äußeren Bereich 45 in Verbindung steht und Öl von dort ansaugt. Des Weiteren besteht auch die Möglichkeit, dass die Pumpeneinheit 46 mit einem Ölreservoir, das innerhalb des Innenraumes 40, innerhalb und außerhab des Inneraumes 40 oder außerhalb des Innenraumes 40 angeordnet sein kann, in Verbindung steht oder mit einem solchen Ölreservoir in Verbindung bringbar ist. Dabei besteht die Möglichkeit, dass das Ölreservoir im radial äußeren Bereich 45 vorgesehen ist oder im radial äußeren Bereich 45 gesammeltes Öl in ein solches Ölreservoir einleitbar ist. Zusätzlich kann die Pumpeneinheit auch Öl direkt aus dem radial äußeren Bereich 45 sowie aus einem solchen Ölreservoir oder aus anderen Ölreservoiren des Gasturbinentriebwerkes 10 in Richtung des Getriebes 30 fördern, um eine Unterversorgung des Getriebes 30 sicher zu vermeiden.

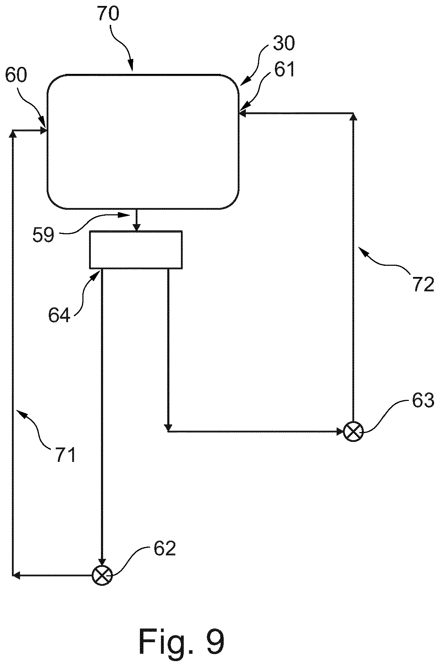

Fig. 9 zeigt eine erste Ausführungsform eines Ölsystems 70 des Gasturbinentriebwerks 10. Das Ölsystem 70 umfasst einen ersten Ölkreislauf 71 und einen zweiten Ölkreislauf 72. Der erste Ölkreislauf 71 und der zweite Ölkreislauf 72 sind mit einem gemeinsamen Ausgang 59 des Getriebes 30 fluidisch gekoppelt. Weiterhin sind der erste Ölkreislauf 71 und der zweite Ölkreislauf 72 jeweils mit einem separaten Einlass 60 bzw. 61 des Getriebes 30 fluidisch gekoppelt. Der erste Ölkreislauf 71 und der zweite Ölkreislauf 72 sind jeweils mit einer Pumpe 62, 63 ausgebildet. Dabei besteht die Möglichkeit, dass die Pumpe 62, die Pumpe 63 oder beide Pumpen 62 und 63 der Pumpeneinheit 46 entsprechen.

Der Auslass 59 des Getriebes 30 umfasst eine Einrichtung 64, die so ausgeführt ist, dass Öl aus dem Getriebe 30 in den ersten Ölkreislauf 71 und in den zweiten Ölkreislauf 72 eingeleitet wird.

### Bezugszeichenliste

- 9: Hauptdrehachse
- 10: Gasturbinentriebwerk
- 11: Kern
- 12: Lufteinlass
- 13: Ölvolumen
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Schubgebläse
- 24: Stützstruktur
- 24A: Bereich der Stützstruktur
- 24B: Wandungsbereich der Stützstruktur
- 24C: Bereich der Stützstruktur
- 26: Welle, Verbindungswelle
- 27: Verbindungswelle
- 28: Sonnenrad
- 29: Trägerelement
- 30: Getriebe, Planetengetriebe
- 32: Planetenrad
- 34: Planetenträger
- 36: Gestänge
- 38: Hohlrad
- 40: Innenraum
- 41 bis 44: Lager
- 45: radial äußerer Bereich der Stützstruktur
- 46: Pumpeneinheit
- 47: Aufnahmebereich
- 48: Öffnung
- 49: Gehäuse der Pumpeneinheit
- 50: Dichteinheit
- 51: Antriebswelle
- 52: Getriebeeinheit
- 53: Stirnrad
- 54: weiteres Stirnrad
- 55 bis 57: Stirnradbereich
- 59: Auslass
- 60, 61: Einlass
- 62, 63: Pumpe
- 64: Einrichtung
- 70: Ölsystem
- 71: erster Ölkreislauf
- 72: zweiter Ölkreislauf

- A: Kernluftstrom
- B: Bypassluftstrom
- R24B: radialer Abstand
- R24Bmax: Maximum des radialen Abstandes
- U: Umfangsrichtung
- X: axiale Richtung
- Y: radiale Richtung

## Patentansprüche

1. Gasturbinentriebwerk (10) eines Luftfahrzeuges mit einem Getriebe (30), das zumindest teilweise radial in einem von einer gehäusefesten Stützstruktur (24, 24A, 24B, 24C) begrenzten und radial innerhalb eines Kernluftstromes (A) vorgesehenen Innenraum (40) der Stützstruktur (24, 24A, 24B, 24C) angeordnet ist,
wobei zumindest Wellen (28, 34) des Getriebes (30) in der Stützstruktur (24, 24A, 24B, 24C) drehbar gelagert sind,
wobei der Innenraum (40) gegenüber der Umgebung der Stützstruktur (24, 24A, 24B, 24C) zumindest in einem radial äußeren Bereich (45) öldicht ausgeführt ist,
wobei eine Pumpeneinheit (46) vorgesehen ist, mit der das Getriebe (30) mit Öl beaufschlagbar ist und die mit dem Getriebe (30) antriebsmäßig verbunden ist,
und wobei die Stützstruktur (24, 24A, 24B, 24C) mit einem Aufnahmebereich (47) für die Pumpeneinheit (46) ausgeführt ist, in den die Pumpeneinheit (46) ausgehend von einem Bereich außerhalb des Innenraumes (40) über eine Öffnung (48) der Stützstruktur (24, 24A, 24B, 24C) einführbar und aus dem die Pumpeneinheit (46) über die Öffnung (48) entnehmbar ist.

2. Gasturbinentriebwerk nach Anspruch 1, **dadurch gekennzeichnet, dass** die Pumpeneinheit (46) ausgehend vom Bereich außerhalb des Innenraumes (40) durch die Öffnung (48) der Stützstruktur (24, 24A, 24B, 24C) in den Innenraum (40) vorkragt.

3. Gasturbinentriebwerk nach Anspruch 1 oder 2, **dadurch gekennzeichnet, dass** zwischen einem Gehäuse (49) der Pumpeneinheit (46) und der Stützstruktur (24, 24A, 24B, 24C) im Bereich der Öffnung (48) eine Dichteinheit (50) vorgesehen ist.

4. Gasturbinentriebwerk nach einem der Ansprüche 1 bis 3, **dadurch gekennzeichnet, dass** ein Bläser (23) und ein Kompressor (14) vorgesehen sind, zwischen den das Getriebe (30) in axialer Richtung (X) angeordnet ist und die über das Getriebe (30) miteinander in Verbindung stehen.

5. Gasturbinentriebwerk nach Anspruch 4, **dadurch gekennzeichnet, dass** ein radialer Abstand (R24B) zwischen einem Wandungsbereich (24B) der Stützstruktur (24, 24A, 24B, 24C) und einer Drehachse (9) des Gasturbinentriebwerkes (10) ausgehend von einem dem Bläser (23) zugewandten Bereich (24A) in Richtung eines dem Kompressor (14) zugewandten Bereichs (24C) zunächst bis zu einem Maximum (R24Bmax) ansteigt und anschließend wieder abnimmt, wobei das Maximum (R24Bmax) wenigstens annähernd oberhalb des Bereiches zwischen dem Bläser (23) und dem Kompressor (14) vorgesehen ist, in dem das Getriebe (30) angeordnet ist.

6. Gasturbinentriebwerk nach Anspruch 4 oder 5, **dadurch gekennzeichnet, dass** der Aufnahmebereich (47) und die Öffnung (48) der Stützstruktur (24, 24A, 24B, 24C) in dem dem Bläser (23) oder in dem dem Kompressor (14) zugewandten Bereich der Stützstruktur vorgesehen sind.

7. Gasturbinentriebwerk nach einem der Ansprüche 1 bis 6, **dadurch gekennzeichnet, dass** der Aufnahmebereich (47) vollständig außerhalb des Innenraumes (40), außerhalb und innerhalb des Innenraumes (40) oder vollständig innerhalb des Innenraumes (40) vorgesehen ist.

8. Gasturbinentriebwerk nach einem der Ansprüche 1 bis 7, **dadurch gekennzeichnet, dass** eine Antriebswelle (51) der Pumpeneinheit (46) mit einer Welle (34; 28) des Getriebes (30) in Wirkverbindung steht.

9. Gasturbinentriebwerk nach Anspruch 8, **dadurch gekennzeichnet, dass** zwischen der Antriebswelle (51) der Pumpeneinheit (46) und der Welle (34; 28) des Getriebes (30) eine Getriebeeinheit (52) vorgesehen ist.

10. Gasturbinentriebwerk nach einem der Ansprüche 4 bis 9, **dadurch gekennzeichnet, dass** eine erste Welle (34) des Getriebes (30) über eine Bläserwelle (36) mit dem Bläser (23) verbunden ist und eine zweite Welle (28) des Getriebes (30) über eine Kompressorwelle (26) mit dem Kompressor (14) in Wirkverbindung steht.

11. Gasturbinentriebwerk nach Anspruch 10, **dadurch gekennzeichnet, dass** zumindest die erste Welle (34) des Getriebes (30) in dem dem Bläser (23) zugewandten Bereich (24A) der Stützstruktur (24, 24A, 24B, 24C) drehbar gelagert ist.

12. Gasturbinentriebwerk nach Anspruch 10 oder 11, **dadurch gekennzeichnet, dass** zumindest die zweite Welle (28) des Getriebes (30) in dem dem Kompressor (14) zugewandten Bereich (24C) der Stützstruktur (24, 24A, 24B, 24C) drehbar gelagert ist.

13. Gasturbinentriebwerk nach einem der Ansprüche 10 bis 12, **dadurch gekennzeichnet, dass** die Bläserwelle (36) und/oder die Kompressorwelle (26) in der Stützstruktur (24, 24A, 24B, 24C) drehbar gelagert ist bzw. sind.

14. Gasturbinentriebwerk nach einem der Ansprüche 1 bis 13, **dadurch gekennzeichnet, dass** eine Saugseite der Pumpeneinheit (46) vorzugsweise über eine Ölleitung, die zumindest teilweise im Innenraum (40) der Stützstruktur (24, 24A, 24B, 24C) verläuft, mit einem Ölreservoir in Verbindung steht.

15. Gasturbinentriebwerk nach einem der Ansprüche 1 bis 14, **dadurch gekennzeichnet, dass** die Pumpeneinheit (46) zumindest zwei Pumpen umfasst.

## Claims

1. Gas turbine engine (10) of an aircraft having a gearbox (30), which is arranged at least partially radially in an interior (40) of a support structure (24, 24A, 24B, 24C), which interior (40) is delimited by the support structure (24, 24A, 24B, 24C) fixed to the housing and is provided radially within a core air flow (A), wherein at least shafts (28, 34) of the gearbox (30) are rotatably mounted in the support structure (24, 24A, 24B, 24C), wherein the interior (40) is designed to be oil-tight with respect to the surroundings of the support structure (24, 24A, 24B, 24C) at least in a radially outer region (45), wherein a pump unit (46) is provided, with which the gearbox (30) can be supplied with oil and which is drive-connected to the gearbox (30), and wherein the support structure (24, 24A, 24B, 24C) is designed with a receiving region (47) for the pump unit (46), into which the pump unit (46) can be inserted from a region outside the interior (40) via an opening (48) of the support structure (24, 24A, 24B, 24C) and from which the pump unit (46) can be removed via the opening (48).

2. Gas turbine engine according to Claim 1, **characterized in that** the pump unit (46) protrudes into the interior (40) from the region outside the interior (40) through the opening (48) of the support structure (24, 24A, 24B, 24C).

3. Gas turbine engine according to either one of Claims 1 or 2, **characterized in that** a sealing unit (50) is provided between a housing (49) of the pump unit (46) and the support structure (24, 24A, 24B, 24C) in the region of the opening (48).

4. Gas turbine engine according to one of Claims 1 to 3, **characterized in that** a blower (23) and a compressor (14) are provided, between which the gearbox (30) is arranged in an axial direction (X) and which are connected to one another via the gearbox (30).

5. Gas turbine engine according to Claim 4, **characterized in that** a radial distance (R24B) between a wall region (24B) of the support structure (24, 24A, 24B, 24C) and an axis of rotation (9) of the gas turbine engine (10), starting from a region (24A) facing the blower (23) in the direction of a region (24C) facing the compressor (14), initially increases up to a maximum (R24Bmax) and then decreases again, wherein the maximum (R24Bmax) is provided at least approximately above the region between the blower (23) and the compressor (14) in which the gearbox (30) is arranged.

6. Gas turbine engine according to either one of Claims 4 or 5, **characterized in that** the receiving region (47) and the opening (48) of the support structure (24, 24A, 24B, 24C) are provided in the region facing the blower (23) or in the region facing the compressor (14) of the support structure.

7. Gas turbine engine according to one of Claims 1 to 6, **characterized in that** the receiving region (47) is provided completely outside the interior (40), outside and inside the interior (40) or completely inside the interior (40).

8. Gas turbine engine according to one of Claims 1 to 7, **characterized in that** a drive shaft (51) of the pump unit (46) is operatively connected to a shaft (34; 28) of the gearbox (30).

9. Gas turbine engine according to Claim 8, **characterized in that** a gear unit (52) is provided between the drive shaft (51) of the pump unit (46) and the shaft (34; 28) of the gearbox (30).

10. Gas turbine engine according to one of Claims 4 to 9, **characterized in that** a first shaft (34) of the gearbox (30) is connected to the blower (23) via a blower shaft (36) and a second shaft (28) of the gearbox (30) is operatively connected to the compressor (14) via a compressor shaft (26).

11. Gas turbine engine according to Claim 10, **characterized in that** at least the first shaft (34) of the gearbox (30) is rotatably mounted in the region (24A) of the support structure (24, 24A, 24B, 24C) facing the blower (23).

12. Gas turbine engine according to either one of Claims 10 or 11, **characterized in that** at least the second shaft (28) of the gearbox (30) is rotatably mounted in the region (24C) of the support structure (24, 24A, 24B, 24C) facing the compressor (14).

13. Gas turbine engine according to one of Claims 10 to 12, **characterized in that** the blower shaft (36) and/or the compressor shaft (26) is or are rotatably mounted in the support structure (24, 24A, 24B, 24C).

14. Gas turbine engine according to one of Claims 1 to 13, **characterized in that** a suction side of the pump unit (46) is preferably connected to an oil reservoir via an oil line which runs at least partially in the interior (40) of the support structure (24, 24A, 24B, 24C).

15. Gas turbine engine according to one of Claims 1 to 14, **characterized in that** the pump unit (46) comprises at least two pumps.

## Revendications

1. Turbine à gaz (10) d'aéronef comprenant une transmission (30) qui est disposée au moins partiellement radialement dans un espace intérieur (40) délimité par une structure de support (24, 24A, 24B, 24C) fixée à l'enveloppe et disposée radialement à l'intérieur d'un flux d'air central (A) de la structure de support (24, 24A, 24B, 24C), au moins des arbres (28, 34) de la transmission (30) étant montés rotatifs dans la structure de support (24, 24A, 24B, 24C), l'espace intérieur (40) étant conçu pour être étanche à l'huile par rapport à l'environnement de la structure de support (24, 24A, 24B, 24C) au moins dans une région radialement extérieure (45), une unité de pompe (46) pouvant alimenter en huile la transmission (30) et étant en prise d'entraînement avec la transmission (30), et la structure de support (24, 24A, 24B, 24C) étant pourvue d'une région de réception (47) destinée à l'unité de pompe (46), dans laquelle l'unité de pompe (46) peut être introduite par une ouverture (48) ménagée dans la structure de support (24, 24A, 24B, 24C) depuis une région située à l'extérieur de l'espace intérieur (40), et peut être retirée de l'unité de pompe (46) par l'ouverture (48).

2. Turbine à gaz selon la revendication 1, **caractérisée en ce que** l'unité de pompe (46) fait saillie dans l'espace intérieur (40) à partir de la région située à l'extérieur de l'espace intérieur (40), par l'ouverture (48) de la structure de support (24, 24A, 24B, 24C).

3. Turbine à gaz selon la revendication 1 ou 2, **caractérisée en ce qu'**une unité d'étanchéité (50) est prévue entre une enveloppe (49) de l'unité de pompe (46) et la structure de support (24, 24A, 24B, 24C) dans la région de l'ouverture (48).

4. Turbine à gaz selon l'une des revendications 1 à 3, **caractérisée en ce qu'**il est prévu une soufflante (23) et un compresseur (14) entre lesquels la transmission (30) est disposée dans la direction axiale (X) et qui communiquent entre eux par l'intermédiaire de la transmission (30).

5. Turbine à gaz selon la revendication 4, **caractérisée en ce qu'**une distance radiale (R24B) entre une région de paroi (24B) de la structure de support (24, 24A, 24B, 24C) et un axe de rotation (9) de la turbine à gaz (10) augmente d'abord jusqu'à un maximum (R24Bmax) en partant d'une région (24A) tournée vers la soufflante (23) en direction d'une région (24C) tournée vers le compresseur (14) et diminue ensuite à nouveau, le maximum (R24Bmax) étant prévu au moins approximativement au-dessus de la région située entre la soufflante (23) et le compresseur (14), dans laquelle est disposé la transmission (30).

6. Turbine à gaz selon la revendication 4 ou 5, **caractérisée en ce que** la région de réception (47) et l'ouverture (48) de la structure de support (24, 24A, 24B, 24C) sont prévues dans la région de la structure de support tournée vers la soufflante (23) ou dans la région tournée vers le compresseur (14).

7. Turbine à gaz selon l'une des revendications 1 à 6, **caractérisée en ce que** la région de réception (47) est prévue entièrement à l'extérieur de l'espace intérieur (40), à l'extérieur et à l'intérieur de l'espace intérieur (40) ou entièrement à l'intérieur de l'espace intérieur (40).

8. Turbine à gaz selon l'une des revendications 1 à 7, **caractérisée en ce qu'**un arbre de transmission (51) de l'unité de pompe (46) est en liaison fonctionnelle avec un arbre (34 ; 28) de la transmission (30).

9. Turbine à gaz selon la revendication 8, **caractérisée en ce qu'**une unité de transmission (52) est prévue entre l'arbre de transmission (51) de l'unité de pompe (46) et l'arbre (34 ; 28) de la transmission (30).

10. Turbine à gaz selon l'une des revendications 4 à 9, **caractérisée en ce qu'**un premier arbre (34) de la transmission (30) est relié à la soufflante (23) par un arbre de soufflante (36) et un deuxième arbre (28) de la transmission (30) est en liaison fonctionnelle avec le compresseur (14) par un arbre de compresseur (26).

11. Turbine à gaz selon la revendication 10, **caractérisée en ce qu'**au moins le premier arbre (34) de la transmission (30) est monté rotatif dans la région (24A) de la structure de support (24, 24A, 24B, 24C) tournée vers la soufflante (23).

12. Turbine à gaz selon la revendication 10 ou 11, **caractérisée en ce qu'**au moins le deuxième arbre (28) de la transmission (30) est monté rotatif dans la région (24C) de la structure de support (24, 24A, 24B, 24C) tournée vers le compresseur (14).

13. Turbine à gaz selon l'une des revendications 10 à 12, **caractérisée en ce que** l'arbre de soufflante (36) et/ou l'arbre de compresseur (26) est ou sont monté(s) rotatif(s) dans la structure de support (24, 24A, 24B, 24C).

14. Turbine à gaz selon l'une des revendications 1 à 13, **caractérisée en ce qu'**un côté aspiration de l'unité de pompe (46) est de préférence en liaison avec un réservoir d'huile par l'intermédiaire d'une conduite d'huile qui s'étend au moins partiellement dans l'espace intérieur (40) de la structure de support (24, 24A, 24B, 24C).

15. Turbine à gaz selon l'une des revendications 1 à 14, **caractérisée en ce que** l'unité de pompe (46) comprend au moins deux pompes.
